# EUROPÄISCHE PATENTANMELDUNG

(11) **EP 3 671 596 A1**
(43) Veröffentlichungstag der Anmeldung: **24.06.2020**
(21) Anmeldenummer: 19216827.6
(22) Anmeldetag: 17.12.2019
(51) Int. Cl.: G06Q 10/08

(54) **SYSTEM UND VERFAHREN ZUM PROTOKOLLIEREN VON PROZESS-SCHRITTEN**

(30) Priorität: 19.12.2018 DE 102018132991
(71) Anmelder: Francotyp-Postalia GmbH, 13089 Berlin (DE)
(72) Erfinder: HEINRICH, Clemens, 16515 Oranienburg (DE); ROSENAU, Dirk, 13469 Berlin (DE); GÜNTHER, Stephan, 16548 Glienicke (DE); HÜBLER, Uwe, 15366 Neuenhagen (DE)
(74) Vertreter: Hertin und Partner Rechts- und Patentanwälte PartG mbB

(57) **Zusammenfassung**

Die Erfindung betrifft ein System und ein Verfahren zur Durchführung eines Arbeitsprozesses an einem Objekt, wobei das System mindestens eine Arbeitsstation, eine Erfassungseinrichtung und eine Auditoreinrichtung umfasst. Das System und das Verfahren können zum Protokollieren von Prozess-Schritten eines Arbeitsprozesses verwendet werden.

## Beschreibung

Die Erfindung betrifft ein System und ein Verfahren zur Durchführung eines Arbeitsprozesses an einem Objekt, wobei das System mindestens eine Arbeitsstation, eine Erfassungseinrichtung und eine Auditoreinrichtung umfasst. Das System und das Verfahren können zum Protokollieren von Prozess-Schritten eines Arbeitsprozesses verwendet werden.

### Stand der Technik:

Es besteht ein technischer Bedarf, Arbeits- oder Prozess-Schritte, die von einem technischen Gerät ausgeführt werden, zu protokollieren. Wenn der Prozess beispielsweise in der Herstellung oder Bearbeitung eines Produkts besteht, so können die durch die Protokollierung ermittelten Daten in Zusammenhang mit dem Produkt gespeichert oder hinterlegt werden, so dass sie für eine spätere Verwendung abrufbar sind. Es besteht insbesondere ein Bedürfnis, dass die Verknüpfung von Protokolldaten und Produkt technisch möglichst sicher erfolgt, d.h. insbesondere abgesichert gegenüber Manipulationen von außen und unverfälschbar.

Es ist daher Aufgabe der vorliegenden Erfindung, ein solches System und ein solches Verfahren zum Protokollieren von Prozess-Schritten bereitzustellen. Dabei soll vorzugsweise nicht einfach nur ein Protokollieren von Prozess-Schritten ermöglicht werden, sondern eine besonders sichere Dokumentation von Arbeitsschritten innerhalb einer Arbeitsstation eines Systems oder eines Geräts bereitgestellt werden, wobei mit der Arbeitsstation der Zustand eines Objekts verändert werden soll. Es wäre insbesondere wünschenswert, wenn die Protokolldaten mit dem bearbeiteten Produkt verknüpft werden könnten, um für eine spätere Verarbeitung zur Verfügung zu stehen, idealerweise über die gesamte Lebensdauer des Objekts beziehungsweise des Produkts.

Gelöst wird die Aufgabe durch die Merkmale der unabhängigen Ansprüche. Vorteilhafte Ausgestaltungen der Erfindung sind in den abhängigen Ansprüchen beschrieben. Erfindungsgemäß ist ein System zur Durchführung eines Arbeitsprozesses an einem Objekt vorgesehen, wobei der Arbeitsprozess mindestens einen Prozess-Schritt umfasst und wobei durch den Arbeitsprozess mindestens ein Zustand des Objekts zumindest zeitweise verändert wird, wobei das System mindestens folgende Komponenten umfasst:
- eine Arbeitsstation zur Durchführung des mindestens einen Prozess-Schritts des Arbeitsverfahrens,
- eine Erfassungseinrichtung zum Erfassen von mindestens einer dem Objekt zugeordneten Erfassungsinformation
- eine Auditoreinrichtung,
wobei jeder Arbeitsstation eine Erfassungseinrichtung zugeordnet ist. Das System ist dadurch gekennzeichnet, dass dem Objekt ein Identifikationselement zugeordnet ist und die Erfassungseinrichtung dazu eingerichtet ist, die Erfassungsinformation an die Auditoreinrichtung auszugeben, wobei die Auditoreinrichtung dazu eingerichtet ist, die Erfassungsinformation dem Identifikationselement des Objekts zuzuordnen. Es ist im Sinne der Erfindung bevorzugt, dass das beschriebene System als Protokollierungssystem oder als System zum Protokollieren von Prozess-Schritten bezeichnet wird.

In einem weiteren Aspekt betrifft die Erfindung ein Verfahren zur Durchführung eines Arbeitsprozesses an einem Objekt, wobei der Arbeitsprozess von einer Arbeitsstation durchgeführt wird und mindestens einen Prozess-Schritt umfasst und wobei durch den Arbeitsprozess mindestens ein Zustand des Objekts zumindest zeitweise verändert wird. Das Verfahren umfasst die folgenden Schritte:
a) Bereitstellung des Objekts,
b) Zuordnung eines Identifikationselement zu dem Objekt,
c) Erfassung mindestens einer Erfassungsinformation durch eine Erfassungsvorrichtung,
d) Übermittlung der Erfassungsinformation durch die Erfassungsvorrichtung an eine Auditoreinrichtung,
e) Zuordnung der Erfassungsinformation zu dem/an das Identifikationselement des Objekts durch die Auditoreinrichtung.

Es ist im Sinne der Erfindung bevorzugt, dass das beschriebene Verfahren als Protokollierungsverfahren oder als Verfahren zum Protokollieren von Prozess-Schritten bezeichnet wird. Die Definitionen, vorteilhafte Wirkungen und überraschende Vorteile der Erfindung, die hinsichtlich des vorgeschlagenen Systems beschrieben wurden, gelten für das vorgeschlagene Verfahren analog, und umgekehrt. Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden.

Die Komponenten des Systems sind insbesondere zur Datenverarbeitung eingerichtet, wobei die Komponenten des Systems Mittel umfassen bzw. dafür konfiguriert sind, die beschriebenen Verfahrensschritte auszuführen.

Eine wesentliche Idee, die der Erfindung zugrunde liegt, besteht darin, dass mit dem vorgeschlagenen System beziehungsweise dem vorgeschlagenen Verfahren eine Protokollierung von Prozess-Schritten durchgeführt werden kann. Das vorgeschlagene System beziehungsweise das vorgeschlagene Verfahren bewirken vorzugsweise, dass einem Produkt eine ID beziehungsweise ein ID-Wert zugeordnet werden kann und dass die einzelnen Prozess-Schritte, die den Arbeitsprozess oder das Arbeitsverfahren bilden und die von dem Produkt durchlaufen werden, besonders sicher protokolliert werden können. Es stellt einen besonderen Vorteil der Erfindung dar, dass die Prozess-Schritte dem Produkt durch Verwendung von IDs oder ID-Werten zugeordnet werden können. Es ist im Sinne der Erfindung bevorzugt, dass das Produkt vorzugsweise auch als Objekt bezeichnet werden kann, wobei die Begriffe synonym verwendet werden. Die Begriffe "ID" und "ID-Wert" werden vorzugsweise synonym verwendet zu dem Begriff "Identifikationsmerkmal" bzw. dem "Identifikationselement" .

Ein wesentliches Merkmal der Erfindung ist es, dass dem Objekt oder Produkt ein Identifikationselement zugeordnet ist.

Diese Zuordnung des Identifikationselementes kann bevorzugt sowohl bereits bei der Herstellung des unbearbeiteten Roh- oder Ausgangs-Objektes erfolgen, als auch während der Durchführung von Prozess-Schritten, bspw. durch eine Arbeitsstation bzw. deren kryptografische Sicherheitseinrichtung, als auch durch die Auditoreinrichtung mit Hilfe der Arbeitsstation. So ist es beispielsweise möglich, dass ein mit dem Objekt verbundener physischer Speicher bereits eine unveränderbare Basis-Identifikation enthält, die durch weitere Prozess-Schritte ergänzt wird. Das Identifikationselement liegt bevorzugt bereits in der Auditoreinrichtung, beispielsweise in einem dafür eingerichteten Speicher, vor, und/oder wird diesem bevorzugt über ein Vertrauenswürdiges Medium und/oder auf kryptografisch sichere Weise zugeführt.

Es kann im Sinne der Erfindung bevorzugt sein, dass das Identifikationselement dem Objekt physisch zugeordnet ist. Vorzugsweise wird eine solche Zuordnung auch als physische Verknüpfung zwischen Objekt und Identifikationselement bezeichnet. Eine physische Zuordnung kann beispielsweise darin bestehen, dass ein Speicher oder eine Speichervorrichtung fest mit dem Objekt verbunden vorliegt.

Ein solcher Speicher kann beispielsweise von einem OTP gebildet werden. Der Begriff "OTP" wird im Sinne der Erfindung vorzugsweise als "one time programmable" verstanden. Der Speicher, der vorzugsweise von einem OTP gebildet wird, stellt demnach bevorzugt ein elektronisches Bauteil dar, das insbesondere nur einmal beschrieben werden kann. Dazu umfasst das OTP vorzugsweise einen nichtflüchtigen Speicher, wobei die physische Zuordnung zwischen Objekt und Identifikationselement vorzugsweise dadurch realisiert werden kann, dass das Objekt den OTP-Speicher umfasst, indem diese beiden Gegenstände fest miteinander verbunden vorliegen.

Bevorzugt ist der Speicher auslesbar durch Auditoreinrichtung, so dass dieser die Zuordnung der Erfassungsinformation zur ID vornehmen kann. Es kann im Sinne der Erfindung auch bevorzugt sein, dass das Identifikationselement dem Objekt logisch zugeordnet ist. Eine logische Zuordnung kann beispielsweise von einer ID gebildet werden, die dem Objekt zugeordnet wird. Es ist im Sinne der Erfindung auch bevorzugt, von einer logischen Verknüpfung zwischen Objekt und Identifikationselement zu sprechen.

Eine ID oder ein ID-Wert ist vorzugsweise dazu in der Lage, eine Unterscheidung von zunächst gleich oder ähnlich erscheinenden Objekten zu ermöglichen, indem beispielsweise den Objekten eine Zahlenkombination oder ein alphanummerischer Code, beispielsweise ein Aktenzeichen, zugeordnet wird, die sich auch bei gleich oder ähnlich erscheinenden Objekten voneinander unterscheiden und dadurch eine Verwechslungsgefahr von Objekten deutlich reduzieren. Eine logische Verknüpfung wird bevorzugt von dem System, insbesondere der Auditoreinrichtung und/oder der Arbeitsstation vorgenommen, insbesondere in Verbindung mit einer verbundenen und/oder integrierten Speichereinheit. Es kann dabei bevorzugt sein, dass ein Drucken eines Codes, welcher ein Identifikationselement enthält, zugleich ein Prozess-Schritt umfasst, welcher den Zustand eines Objekts ändert. Beispielsweise kann ein auf ein Objekt gedruckter Code, z. B. in Form eines Barcodes und/oder Frankiercodes, den Zustand eines Objekts zu ändern, insbesondere dessen Wert, und gleichzeitig in dem aufgedruckten Code ein Identifikationselement zu umfassen.

Im Kontext des vorgeschlagenen Verfahrens ist es vorgesehen, dass ein Objekt oder ein Produkt bereitgestellt wird, dass zunächst einen ersten Zustand aufweist.

Es ist im Sinne der Erfindung bevorzugt, dass dieser erste Zustand mit einem Zustandsparameter beschrieben werden kann, aus dem eine Erfassungseinrichtung, eine Erfassungsinformation beziehungsweise ein Erfassungswert abgeleitet werden kann. Im Folgenden wird häufig von der Erfassungsinformation gesprochen werden. Es ist jedoch bevorzugt, dass damit mindestens eine Erfassungsinformation gemeint ist als auch mehrere, beispielsweise 2, 3, 4, 5, 10, 50 oder 100 Erfassungsinformationen gemeint sein können. Mit der Anzahl der Informationen ist bevorzugt nicht die Anzahl der verwendeten Bits gemeint, sondern die Anzahl der Informationen im semantischen Sinne, also die Informationen mit verschiedenen Bedeutungen in Bezug auf das Objekt.

Insbesondere kann dem Objekt des Weiteren ein physisches und/oder logisches Identifikationselement zugeordnet werden. Im Kontext des vorgeschlagenen Verfahrens wird an dem Objekt ein Arbeitsprozess durchgeführt, und zwar durch eine Arbeitsstation, die Bestandteil des vorgeschlagenen Systems ist beziehungsweise eine Komponente des Systems darstellt. Der Arbeitsprozess umfasst mindestens einen Prozess-Schritt. Es ist im Kontext der vorliegenden Erfindung vorgesehen, dass durch den Arbeitsprozess mindestens ein Zustand des Objekts zumindest zeitweise verändert wird. Dies bedeutet im Sinne der Erfindung bevorzugt, dass eine Änderung des Zustands eines Objekts zumindest für einen gewissen Zeitraum, d.h. für eine Zeitspanne mit einer gewissen Zeitdauer anhält, wobei die Zustandsänderung dauerhaft sein kann oder wobei die Zustandsänderung nach Ablauf einer gewissen Zeit beendet werden kann. Im letzten Fall wird vorzugsweise von einer vorübergehenden Zustandsänderung gesprochen. In diesem Fall kann das Objekt beispielsweise in seinen Ausgangszustand zurückkehren, der im Sinne der Erfindung als erster Zustand bezeichnet wird. Es kann aber auch bevorzugt sein, dass das Objekt in einen dritten Zustand überführt wird, der sich von dem Ausgangs- und dem Zwischenzustand, der vorzugsweise als zweiter Zustand bezeichnet wird, unterscheidet.

Bei dem Objekt, dessen Zustand durch das Arbeitsverfahren verändert wird, kann es sich vorzugsweise um ein physisches oder ein nicht-physisches Objekt handeln. Vorzugsweise wird für die Durchführung des Arbeitsprozesses eine Arbeitsstation verwendet, bei der es sich beispielsweise um eine Frankiermaschine oder einen Bestandteil einer Frankiermaschine handeln kann. In diesem Fall kann das Objekt beispielsweise ein physisches Objekt sein, zum Beispiel ein Briefumschlag, der mit einem Frankiercode bedruckt wird. Das Aufdrucken des Frankiercodes stellt im Sinne der Erfindung eine Änderung des Zustands des Objekts dar, denn der Briefumschlag wird durch das Aufdrucken von einem ersten Zustand in einen zweiten Zustand überführt. In dem ersten Zustand liegt der Briefumschlag vorzugsweise unbedruckt und dadurch unfrankiert vor, während der Briefumschlag im zweiten Zustand bedruckt und dadurch frankiert vorliegt.

Das Objekt kann beispielsweise auch ein Zahlenwert oder ein Parametersatz sein, der den Zustand eines Objekts oder eines Verfahrensschrittes beschreibt. Eine Veränderung dieses Zahlenwerts oder dieses Parametersatzes kann vorzugsweise eine Änderung eines Objektszustands im Sinne der Erfindung darstellen. Wenn sich ein Zahlenwert oder jeder einzelne Parameter in einem Parametersatz ändert, wird im Sinne der Erfindung vorzugsweise von einer vollständigen Änderung des Objektszustands gesprochen. Wenn sich nur ein Parameter oder eine Teilmenge der Parameter des Parametersatzes ändert, so ist vorzugsweise von einer teilweisen Änderung des Objektszustands die Rede.

Mit dem vorgeschlagenen System und dem vorgeschlagenen Verfahren können vorteilhafterweise Zustände von Systemkomponenten, wie Arbeitsstationen, oder Objekten, überwacht beziehungsweise die zur Bearbeitung oder Veränderung eines Objekts verwendeten oder angewandten Prozess-Schritte protokolliert werden. Dieses Protokollieren erfolgt insbesondere auf einem besonders hohen Sicherheitsniveau, das vorzugsweise durch die Vorsehung der Auditoreinrichtung gewährleistet wird, die beispielsweise als Hardware Security Module (HSM) ausgebildet sein kann. Die Bereitstellung der Protokollierungsmöglichkeit von Prozess-Schritten ist besonders deshalb vorteilhaft, weil in der Wirtschaft und in der Industrie ein hoher Bedarf nach Zertifizierungs-, Dokumentations- und Protokollierungsmöglichkeiten besteht, die hohen Sicherheitsanforderungen entsprechen.

Es ist im Sinne der Erfindung bevorzugt, dass der Arbeitsprozess, dessen Prozess-Schritte im Rahmen des vorgeschlagenen Verfahrens protokolliert werden, mindestens einen Prozess-Schritt umfasst. Dies bedeutet im Sinne der Erfindung bevorzugt, dass der Arbeitsprozess einen oder mehrere Prozess-Schritte umfassen kann. Vorzugsweise ändert sich bei der Durchführung des Arbeitsprozesses mindestens ein Zustand des Objekts, d.h. es können ein oder mehrere Zustände des Objekts verändert werden. Es kann im Sinne der Erfindung bevorzugt sein, dass je ein Zustand des Objekts mit einem eigenen Prozess-Schritt verändert wird. Es kann aber alternativ auch bevorzugt sein, dass zur Änderung eines Zustands des Objekts mehrere Prozess-Schritte erforderlich sind oder dass mit einem Prozess-Schritt mehrere Objektszustände verändert werden können.

Der Begriff "Zustand eines Objekts" beschreibt im Sinne der Erfindung bevorzugt den Zustand, den ein Objekt hinsichtlich einer Eigenschaft aufweisen kann. Wenn das Objekt beispielsweise von einem Briefumschlag gebildet wird, so kann der Briefumschlag bedruckt oder unbedruckt, frankiert oder unfrankiert, offen oder verschlossen vorliegen. Diese Objektszustände werden im Sinne der Erfindung als binäre Zustände oder binäre Eigenschaften des Objekts bezeichnet, weil sie in zwei voneinander verschiedenen Ausprägungen vorliegen können.

Die binären Zustände repräsentieren vorzugsweise disjunkte Teilmengen des Zustandsraumes, wobei der Zustandsraum vorzugsweise von zwei disjunkten Teilmengen gebildet wird und das Objekt jeweils in einem Zustand vorliegen kann, der entweder einer ersten oder einer zweiten Teilmenge des Zustandsraumes zugeordnet wird. Die Überführung des Objekts von einem ersten zu einem zweiten Zustand erfolgt bevorzugt mit der Arbeitsstation des vorgeschlagenen Systems, wobei die Arbeitsstation, indem ein Prozess-Schritt ausgeführt wird, diese Überführung von einem ersten in einen zweiten binären Zustand bewirkt. Es kann im Sinne der Erfindung aber auch bevorzugt sein, dass die Objektszustände kontinuierliche Zustände sind, wobei die Zustände vorzugsweise fließend ineinander übergehen und keine disjunkten Teilmengen des Zustandsraumes bilden.

Wenn das Objekt beispielsweise von einem Briefumschlag gebildet wird, kann der Arbeitsprozess beispielsweise darin bestehen, dass der Briefumschlag frankiert und verschlossen werden soll. In diesem Fall besteht der Arbeitsprozess aus zwei Prozess-Schritten - Frankieren und Verschließen - und hinsichtlich beider Eigenschaften, die mit dem jeweils einen Prozess-Schritt verändert werden, liegen binäre Objektszustände vor, nämlich frankiert und unfrankiert, sowie offen und geschlossen.

Es kann im Sinne der Erfindung auch bevorzugt sein, dass durch die Durchführung eines Prozess-Schritts an einem Objekt - zum Beispiel dem Briefumschlag - der Zustand eines anderen Objekts geändert wird. Wenn das Frankieren des Briefumschlags beispielsweise durch eine Frankiermaschine durchgeführt wird und der Briefumschlag dadurch von einem ersten Zustand (unfrankiert) in einen zweiten Zustand (frankiert) überführt wird, so kann durch diese Zustandsänderung gleichzeitig ein Zahlenwert, der in der Frankiermaschine gespeichert ist, vermindert werden. Beispielsweise kann in der Frankiermaschine ein Guthabenwert gespeichert sein, der einem Geldbetrag entspricht, mit dem ein Nutzer eine Frankiermaschine aufgeladen hat, um damit seine täglich ausgehende Post zu frankieren. Wenn nun ein Briefumschlag frankiert wird, kann diesem Frankiervorgang ein Zahlenwert zugeordnet werden, je nachdem welches Postprodukt für die Frankierung des Briefumschlags ausgewählt wurde. Hierbei kann es sich beispielsweise um einen Portobetrag für einen Standardbrief, einen Maxibrief oder ein Einschreiben handeln, ohne darauf beschränkt zu sein. Der in der Frankiermaschine gespeicherte Guthabenwert wird, ausgelöst durch den Frankierungsvorgang, um den Zahlenwert, der dem Postprodukt entspricht oder diesem zugeordnet ist, vermindert.

Die Reduzierung des Guthabenwerts entspricht im Sinne der Erfindung bevorzugt der Änderung eines Zustands eines nicht-physischen Objekts. Dabei wird in diesem Fall ein Zustand innerhalb der Frankiermaschine, die in diesem Beispiel vorzugsweise eine Arbeitsstation zur Durchführung des Arbeitsprozesses darstellt, verändert, nämlich von einem ersten, ursprünglichen Guthabenwert auf einen durch den Frankiervorgang reduzierten zweiten Guthabenwert. Mit anderen Worten ändern sich durch den Frankiervorgang die Zustände von zwei Objekten, nämlich der Zustand des Briefumschlags und der Zustand des Guthabenwerts, so dass hier mit einem Prozess-Schritt zwei Zustandsänderungen vorgenommen werden.

Es kann im Sinne der Erfindung bevorzugt sein, dass beim Bedrucken des Briefumschlags neben den postalisch erforderlichen Informationen, die das Frankieren des Briefes betreffen, weitere Informationen auf den Briefumschlag aufgedruckt werden.

Dabei kann es sich vorzugsweise um Meta-Daten handeln, die den Frankierprozess beschreiben. Die Meta-Daten können beispielsweise Informationen zum Aufstellungsort oder Gerätetyp der Frankiermaschine umfassen, zum Frankierzeitpunkt, darüber, ob es sich um eine Einzel- oder Sammelfrankierung gehandelt hat usw. Es ist im Sinne der Erfindung bevorzugt, dass diese Meta-Daten mit den Erfassungsinformationen, die von der Erfassungseinrichtung erfasst werden, assoziiert sind beziehungsweise von diesen gebildet werden. Diese Informationen können beispielsweise in den aufgedruckten Portocode integriert werden oder sie können auf dem Briefumschlage neben dem Portocode aufgedruckt werden. Durch ein solches Aufdrucken wird beispielsweise eine physische Verknüpfung zwischen einem Identifikationselement und dem Objekt erzeugt beziehungsweise ein Identifikationselement wird dem Objekt physisch zugeordnet. Vorzugsweise kann in diesem Anwendungsbeispiel durch die Verknüpfung der Meta-Daten mit dem veränderten Produkt, hier dem Briefumschlag, die Protokollierung des Prozess-Schritts "Bedrucken" beziehungsweise "Frankieren" ermöglicht werden.

Es kann im Sinne der Erfindung auch bevorzugt sein, dass eine logische Verknüpfung zwischen Identifikationselement und dem Objekt hergestellt wird. Dies kann beispielsweise dadurch erfolgen, dass die oben beschriebenen Meta-Daten in einem Speicher abgelegt werden, so dass sie für spätere Verwendungen abgerufen werden können. Bei dem Speicher kann es sich um einen physischen Speicher handeln oder um eine Cloud oder um eine Speicherung in einer Blockchain. Die Verwendung von Blockchain-Technologien zu Protokollierungszwecken ist besonders deswegen von Vorteil, weil den entsprechenden Meta-Daten, die einen Prozess-Schritt beschreiben, beispielsweise mit einem nicht zu manipulierenden Zeitstempel versehen werden können beziehungsweise weil es möglich ist, niederzuschreiben, welche Daten zu welchem Zeitpunkt über das Produkt oder den Prozess-Schritt verfügbar waren. Beispielsweise kann die Arbeitsstation hierzu mit einer Blockchainstruktur verbunden werden, um relevante Prozess- und Objektinformationen in der Blockchain zu speichern. In dieser bevorzugten Ausgestaltung der Erfindung kann das Protokollsystem eine Blockchainstruktur umfassen.

Im Kontext des vorgeschlagenen Verfahrens ist es ferner vorgesehen, dass eine Erfassungsinformation mit einer Erfassungsvorrichtung erfasst wird. Die Erfassungsvorrichtung kann synonym auch als Erfassungseinrichtung bezeichnet werden. Vorzugsweise ist jeder Arbeitsstation des vorgeschlagenen Systems eine Erfassungseinrichtung zugeordnet, mit der beispielsweise Zustände und/oder Zustandsänderungen der Arbeitsstation, welche bevorzugt als Betriebsparameter beschrieben sind und/oder des Objekts, welche bevorzugt als Zustandsparameter beschrieben sind, erfasst werden können. Es ist darüber hinaus vorgesehen, dass die von der Erfassungsvorrichtung ermittelten Erfassungsinformationen oder -werte an die Auditoreinrichtung des vorgeschlagenen Systems übermittelt werden beziehungsweise, dass die Erfassungsinformation an die Auditoreinrichtung ausgegeben wird.

Die Auditoreinrichtung ordnet dann bevorzugt mindestens eine ausgewählte Erfassungsinformation einem Identifikationselement des Objekts zu, das im Rahmen des Arbeitsprozesses verarbeitet wird beziehungsweise das im Rahmen des vorgeschlagenen Verfahrens einer Zustandsänderung unterzogen wird. Es ist im Sinne der Erfindung bevorzugt, dass die Zuordnung der Erfassungsinformation zu dem Identifikationselement des Objekts in einer gegen unerkannte Manipulation besonders gut abgesicherten Weise erfolgt. Dies bedeutet im Sinne der Erfindung bevorzugt, dass die Absicherung unter Verwendung von FIPS-zertifizierten Vorrichtung und/oder FIPS-zertifizierten Methoden erfolgt. Es ist im Sinne der Erfindung bevorzugt, dass die Auditoreinrichtung dazu eingerichtet ist, dem System relevante Komponenten hinzuzufügen. Es ist im Sinne der Erfindung bevorzugt, dass die Zuordnung der Erfassungsinformation zu dem Identifikationselement des Objekts eindeutig ist und dass dadurch eine Serialisierung der Objekte ermöglicht wird.

Das vorgeschlagene System umfasst mindestens eine Arbeitsstation, eine Erfassungseinrichtung und eine Auditoreinrichtung. Die Arbeitsstation, Erfassungseinrichtung und Auditoreinrichtung werden im Sinne der Erfindung als Systemkomponenten bezeichnet. Der Begriff "mindestens" bedeutet im Sinne der Erfindung bevorzugt, dass das System beispielsweise mindestens eine Arbeitsstation umfasst, dass es aber ebenso bevorzugt sein kann, dass das System zwei oder drei Arbeitsstationen umfasst. Dies gilt analog für die anderen Systemkomponenten. Es kann auch sein, dass das System neben den genannten Systemkomponenten andere Komponenten umfasst. Es kann im Sinne der Erfindung bevorzugt sein, dass sich die Systemkomponenten gemeinsam an einem Ort befinden. Es kann aber auch bevorzugt sein, dass sich einzelne Systemkomponenten oder Gruppen von Systemkomponenten an unterschiedlichen Orten befinden oder dort aufgestellt sind.

Die Arbeitsstation ist vorzugsweise dazu eingerichtet, mindestens einen Prozess-Schritt des Arbeitsverfahrens durchzuführen. Das Arbeitsverfahren, das im Sinne der Erfindung bevorzugt auch als Arbeitsprozess bezeichnet wird, umfasst vorzugsweise einen oder mehrere Prozess-Schritte, wobei die Prozess-Schritte mit einer Arbeitsstation oder mehreren Arbeitsstationen des vorgeschlagenen Systems durchgeführt werden können. Eine Arbeitsstation kann beispielsweise eine Frankiermaschine sein, wobei eine Frankiermaschine vorzugsweise ein Mainboard, ein Drucksystem zur Herausgabe beziehungsweise zum Drucken von Briefsendungen, sowie ein Display und mechanische Vorrichtungen zur Beförderung von Umschlägen oder Etikettenstreifen aufweist.

Auf dem Mainboard der Frankiermaschine können verschiedene Softwareanwendungen installiert sein und betrieben werden. Es ist im Sinne der Erfindung bevorzugt, dass entsprechende Portowerte oder Portocodes direkt auf einen Briefumschlag oder einen Etikettenstreifen gedruckt werden. Das Drucken eines Portocodes auf einen Briefumschlag beziehungsweise einen Etikettenstreifen wird im Sinne der Erfindung vorzugsweise als "Erzeugung eines Abdrucks" bezeichnet, wobei die Erzeugung des Abdrucks im Sinne dieser Erfindung vorzugsweise einer Änderung des Zustands eines Briefumschlags, d.h. eines Objekts, entspricht. Es ist im Sinne der Erfindung bevorzugt, dass der Abdruck mit Hilfe einer kryptografisch arbeitenden Sicherheitseinrichtung, die vorzugsweise Bestandteil der Frankiermaschine ist, erzeugt wird, die beispielsweise mit der Auditoreinrichtung des vorgeschlagenen Systems assoziiert sein kann.

Die Erfassungseinrichtung ist vorzugsweise dazu eingerichtet, eine Erfassungsinformation zu erfassen, die dem Objekt oder Produkt zugeordnet ist. Es ist im Sinne der Erfindung bevorzugt, dass jeder Arbeitsstation des Systems eine Erfassungseinrichtung zugeordnet ist. Wenn das vorgeschlagene System beispielsweise zwei Arbeitsstationen umfasst, umfasst das System vorzugsweise auch zwei Erfassungseinrichtungen, wobei jeweils eine Arbeitsstation und eine Erfassungseinrichtung des vorgeschlagenen Protokollierungssystems einander zugeordnet sind. Mit der Erfassungseinrichtung werden insbesondere die Erfassungsinformationen an die Auditoreinrichtung des vorgeschlagenen Systems weitergeleitet beziehungsweise übermittelt. Es ist im Sinne der Erfindung bevorzugt, wenn dieser Vorgang als "Ausgabe der Erfassungsinformation" bezeichnet wird. Die Erfassungsinformation kann vorzugsweise auch als "Erfassungswert" bezeichnet werden. Es ist im Sinne der Erfindung bevorzugt, dass die Erfassungseinrichtung als Informationsermittlerin und Informationsgeberin fungiert, während die Auditoreinrichtung als Informationsempfängerin fungiert.

Ferner umfasst das vorgeschlagene System eine Auditoreinrichtung, die dazu eingerichtet ist, die Erfassungsinformation dem Identifikationselement des Objekts zuzuordnen. Dies erfolgt vorteilhafterweise in einer gegen unerkannte Manipulation besonders gut abgesicherten Weise.

Durch die Zuordnung von Erfassungsinformation und Identifikationselement des Objekts oder des Produkts wird vorteilhafterweise erreicht, dass jeder Prozess-Schritt des Arbeitsverfahrens, mit dem ein Zustand des Objekts verändert werden soll, sicher protokolliert, vorzugsweise indem eine Verknüpfung zwischen Identifikationselement und Objekt erzeugt wird. Insbesondere erfolgt eine besonders sichere Zuordnung von Prozess-Schritt zu Objekt-ID, wodurch vorteilhafterweise eine Protokollierung der Prozess-Schritte ermöglicht wird. Insbesondere können die Prozess-Schritte durch die Zuordnung von Erfassungswerten zu Identifikationselementen des Objekts protokolliert werden. Bei den Prozess-Schritten handelt es sich vorzugsweise um solche Prozess-Schritte des Arbeitsprozesses, die von dem Objekt oder Produkt durchlaufen werden, beispielsweise indem in der Arbeitsstation eine Handlung an dem Objekt oder Produkt vorgenommen wird. Es ist im Sinne der Erfindung insbesondere vorgesehen, dass der Arbeitsprozess mindestens einen Prozess-Schritt umfasst und dass durch den Arbeitsprozess mindestens ein Zustand des Objekts zumindest zeitweise verändert wird.

Die Auditoreinrichtung des vorgeschlagenen Systems, die im Rahmen des vorgeschlagenen Verfahrens verwendet wird, kann im Sinne der Erfindung bevorzugt auch als Auditor bezeichnet werden, wobei die Bezeichnungen synonym verwendet werden. Die Auditoreinrichtung umfasst vorzugsweise ein *Hardware Security Module* (HSM) oder wird von einem solchen gebildet. Das HSM kann vorzugsweise auch Bestandteilt der Arbeitsstation oder einer anderen Komponente des vorgeschlagenen Systems sein. Es ist im Sinne der Erfindung insbesondere bevorzugt, dass die Auditoreinrichtung eine Sicherheitseinrichtung der Arbeitsstation ist.

Es ist im Sinne der Erfindung bevorzugt, dass das HSM ein hardwarebasiertes, kryptografisches Modul darstellt, das vorzugsweise eine FIPS-140-2-Zertifizierung aufweist. Es ist im Sinne der Erfindung bevorzugt, dass die Formulierung, dass eine Vorrichtung sicher arbeitet, technisch bedeutet, dass die entsprechende Vorrichtung eine solche FIPS-Zertifizierung aufweist. Durch die Vorsehung der mit FIPS-Zertifizierung arbeitenden Auditoreinrichtung wird insbesondere ein technisches Problem mit technischen Mitteln gelöst, nämlich die Bereitstellung einer besonders sicheren Datenübertragung innerhalb eines Protokollierungssystems und - verfahrens. Das HSM kann von einem Einzelchipmodul, einem autonomen Multichipmodul oder einem eingebetteten Multichipmodul gebildet werden oder ein solches umfassen. Das HSM ist vorzugsweise dazu eingerichtet, Daten besonders sicher zu speichern. Insbesondere ist ein HSM dazu in der Lage, kritische Sicherheitsparameter, wie Passwörter, vertrauliche Daten oder Schlüssel zur Verschlüsselung von Daten zu generieren, zu speichern, zu nutzen und/oder zu pflegen.

Die Schlüssel können beispielsweise symmetrisch oder asymmetrisch sein. Vorteilhafterweise können HSM als kryptografische Coprozessoren eingesetzt werden. In bevorzugten Ausführungsformen kann ein HSM eine batteriebetriebene Schaltung und/oder eine Spannungsüberwachung aufweisen. Dadurch wird insbesondere die Integration oder Vorsehung einer Echtzeituhr zur korrekten Zeiterfassung und Zeitstempelung ermöglicht, wodurch beispielsweise gewährleistet werden kann, dass abgelaufene Schlüssel nicht länger genutzt werden können. Darüber hinaus kann ein HSM einen redundanten Speicher umfassen, der beispielsweise dafür genutzt werden kann, mehrere Technologien zur Erzeugung einer zusätzlichen Datensicherheit gleichzeitig zu verwenden.

Insbesondere kann mit Hilfe des HSM eine Public-Key-Infrastruktur auf höchstem Niveau realisiert werden, wie sie dem Fachmann bekannt ist.

Es ist im Sinne der Erfindung, dass ein HSM eine Kette von Zertifikaten umfasst, die vorzugsweise vor Inbetriebnahme des HSM auf die Vorrichtung geladen werden. Das HSM ist darüber hinaus dazu eingerichtet, eigene private und öffentliche Geräteschlüssel zu erzeugen. Vorzugsweise verlässt der private Schlüssel zu keinem Zeitpunkt das HSM, während der öffentliche Schlüssel nach außen abgegeben werden kann, zum Beispiel an einen externen Server zur dortigen Signierung. Im Gegenzug kann das HSM ein personalisiertes, signiertes Gerätezertifikat erhalten, mit dem das HSM die Sicherheit in einem *Internet of Things-System* (IOT) deutlich erhöhen kann. Das HSM kann dann vom externen Server als "echte" Sicherheitseinrichtung erkannt und authentifiziert werden, was insbesondere durch die Vergabe einer eindeutigen Kennung ermöglicht wird. Auf diese Weise lassen sich besonders unkompliziert authentifizierte TLS-Verbindungen herstellen (Transport Layer Security).

Es ist im Sinne der Erfindung bevorzugt, dass die Erfassungseinrichtung mindestens einen Sensor oder eine Sensorsystem umfasst. Die Sensoren der Erfassungseinrichtung sind vorzugsweise dazu eingerichtet, die Erfassungsinformation an die Auditoreinrichtung weiterzuleiten, wobei die Auditoreinrichtung bevorzugt mindestens eine Erfassungsinformation dem Identifikationselement des Objekts zuordnen kann, wobei dem Objekt ein Identifikationselement zugeordnet ist. Die Erfassungsinformation umfasst oder beschreibt vorzugsweise Betriebs- und/oder Zustandsparameter der Arbeitsstationen, wobei der von dem Betriebs- und/oder Zustandsparameter beschriebene Zustand der Arbeitsstation insbesondere zu dem Zeitpunkt angenommen wird, in dem das Objekt die Arbeitsstation durchläuft. Der Betriebsparameter beschreibt zum Beispiel, ob eine Arbeitsstation einsatzbereit ist oder nicht. Bei dem Betriebsparameter handelt es sich bevorzugt um eine interne Größe der Arbeitsstation, wie beispielsweise einen Druckmittel-Füllstand. Es ist dagegen im Sinne der Erfindung bevorzugt, dass die Zustandsparameter die Parameter beschreiben, die von außen auf das System oder die Arbeitsstation, z. B. auch durch das Objekt, einwirken. Dabei kann es sich zum Beispiel um eine Temperatur in einem Raum handeln, in dem die Arbeitsstation aufgestellt ist. Es kann sich zum Beispiel auch um eine Luftfeuchte, einen Umgebungsdruck, eine Tageszeit, eine Helligkeit, eine Luftverunreinigung usw. handeln, ohne darauf beschränkt zu sein.

Es kann im Sinne der Erfindung bevorzugt sein, dass die Erfassungseinrichtung insbesondere als Sicherheitseinrichtung fungiert und dass das vorgeschlagene System vorzugsweise mehrere Sicherheitseinrichtungen umfasst, die miteinander beziehungsweise untereinander kommunizieren können. Es ist ganz besonders bevorzugt, dass die Sicherheitseinrichtungen der Arbeitsstationen miteinander ein Kommunikationsnetzwerk bilden, in dem Informationen ausgetauscht werden können. Es ist ganz besonders bevorzugt, dass der Informationsaustausch und die Kommunikation in dem Kommunikationsnetzwerk, das vorzugsweise Bestandteil des vorgeschlagenen Systems ist, sicher erfolgt, d.h. den Anforderungen an eine Sicherheit gemäß dem FIPS-Standard genügt. Es ist ganz besonders bevorzugt, dass die Kommunikation im bevorzugten Kommunikationsnetzwerk kryptografisch abgesichert durchgeführt wird, z. B. durch die Verwendung einer geeigneten Public-Key-Infrastruktur. Ein Fachmann weiß, wie er eine solche Infrastruktur zur kryptografisch sicheren Kommunikation in einem Netzwerk implementieren kann. Es ist im Sinne der Erfindung darüber hinaus ganz besonders bevorzugt, dass mit dem vorgeschlagenen System beziehungsweise dem vorgeschlagenen Verfahren eine Protokollierung von Prozess-Schritten durchgeführt werden kann, und zwar auf eine sichere Art und Weise. Dies stellt einen wesentlichen Vorteil der Erfindung dar.

Beispielsweise kann das vorgeschlagene System und das vorgeschlagene Verfahren eingesetzt werden, um in einer Stadt oder in einer Gemeinde ein Schadstoffüberwachungssystem zu etablieren. Dabei kann beispielsweise vor einer Ampel in die Straße Absaugschächte für die von Fahrzeugen abgegebenen Abgase vorgesehen sein. Diese Absaugschächte können beispielsweise in Abständen, die üblichen PKW-Längen entsprechen, in den Boden eingelassen sein gerechnet von virtuellen oder gedanklichen Geraden, die auf Höhe der Ampel gedanklich gezogen wird.

Die Luft im Bereich der Absaugschächte kann durch die Absaugschächte eingesaugt und analysiert werden, wobei bevorzugt Erfassungswerte von Fahrzeugen als Zustandsinformation der Arbeitsstation erfasst werden und/oder Erfassungswerte ohne Fahrzeuge, die bevorzugt als Referenzwert für die aktuelle Schadstoffbelastung der Luft eine zweite Zustandsinformation der Arbeitsstation darstellen. Die Arbeitsstation umfasst dabei bevorzugt mindestens einen Absaugschacht. Darüber hinaus können bevorzugt Überwachungsmittel bzw. Identifikationseinheiten vorgesehen sein, wie beispielsweise eine Kamera, die Bilder von den entsprechenden Fahrzeugen bevorzugt zur Ermittlung eines Identifikationselements aufnehmen, so dass später die ermittelten Abgas- und Schadstoffergebnisse mit dem entsprechenden Fahrzeug in Verbindung gebracht werden können.

Die Absaugschächte, die Analyseeinheiten in den Absaugeschächten und die Überwachungsmittel stellen bevorzugt Arbeitsstationen im Sinne der vorliegenden Erfindung dar bzw. sind von einer Arbeitsstation umfasst und sind insbesondere mit Erfassungseinrichtungen versehen, wobei die Sensoren der Erfassungseinrichtungen im vorliegenden Anwendungsbeispiel für die Erfindung Luftanalysesensoren oder optische Sensoren, wie z. B. Spektrometer, nichtdispersiver Infrarotsensor, Interferenzfilterkorrelator, elektrochemische Zelle, paramagnetischer Messsensor, Wärmeleitfähigkeitsanalysator, (optischer) Filter, Fotodetektor und/oder Kamera sein können, während ein Fahrzeug und/oder seine Abgase beziehungsweise die ermittelten Abgaswerte bevorzugt im Sinne der Erfindung Objekte darstellen können, denen Identifikationselemente zugeordnet werden können. Vorzugsweise erheben die Erfassungseinrichtungen die Erfassungsinformation - hier zum Beispiel die wesentlichen Größen der Abgaswerte - und leiten sie an die Auditoreinheit weiter, was im Sinne der Erfindung als "Ausgabe" bezeichnet wird.

Die Identifikationselemente bzw. das Identifikationselement ist bevorzugt eindeutig dem Objekt zuordenbar, z. B. durch ein KFZ-Kennzeichen. Dieses kann bevorzugt durch eine mit der Arbeitsstation verknüpfte Identifikationseinrichtung erfasst werden, z. B. durch eine an geeigneter Position in der Nähe eines Absaugschachtes positionierte Kamera und/oder einen anderen geeigneten Sensor, welcher z. B. auf der Messung eines elektromagnetischen Feldes basiert. Diese Information kann bevorzugt ebenso neben dem Identifikationselement, z. B. dem Kennzeichen, weitere Informationen enthalte, vorzugsweise Erfassungsinformationen, welche dem Objekt zugeordnet werden, z. B. der Fahrzeugtyp des identifizierten Fahrzeugs. Diese Information wird vorzugsweise an eine Auditoreinrichtung weitergeleitet, wo sie der Erfassungsinformation zugeordnet wird, bevorzugt kryptografisch sicher, so dass bevorzugt weder Erfassungsinformation noch Identifikationselement noch deren Zuordnung z. B. für einen nicht berechtigten Dritten einsehbar und/oder manipulierbar sind, unabhängig vom tatsächlichen Verarbeitungs- und/oder Speicherungsort der Daten.

Die Ausgabe kann vorzugsweise dadurch erfolgen, dass die Auditoreinrichtung auf Grundlage der von den Erfassungseinrichtungen übermittelten Informationen den Ist-Zustand des Systems dadurch ermittelt, dass die Zustands- und/oder Betriebsparameter der Arbeitsstationen und/oder die erfassten Betriebsparameter, wie beispielsweise die aktuelle Uhrzeit, festgestellt und/oder ausgewertet werden, wobei insbesondere der Zustand der Arbeitsstation untersucht wird zu dem Zeitpunkt, in dem das Objekt die Arbeitsstation durchläuft. Im oben genannten Schadstoffüberwachungsbeispiel kann dies beispielsweise der Zeitpunkt sein, zu dem ein Fahrzeug den Absaugschacht passiert und/oder an der Überwachungskamera vorbeifährt, und/oder der Zeitpunkt, zu dem eine Abgasmenge eine Analyseeinheit passiert.

Der besondere Vorteil des vorgeschlagenen Systems besteht insbesondere darin, dass die Daten zwischen den Systemkomponenten "sicher" im Sinne der Erfindung ausgetauscht werden, nämlich beispielsweise unter Verwendung von FIPS-zertifizierten Sicherheitseinrichtungen oder Systemkomponenten oder Arbeitsstationen, z. B. durch Verwendung einer Public-Key-Infrastruktur. Dadurch wird insbesondere sichergestellt, dass die übertragenen Daten nicht von außen manipuliert, abgezweigt oder missbraucht werden können. Die sichere, d.h. FIPS-zertifizierte Übertragung von Daten innerhalb des Systems, stellt einen besonderen Vorteil der vorliegenden Erfindung dar.

Darüber hinaus können die erhobenen und durch Analyse weiter verarbeiteten Daten vorteilhafterweise weiter verwendet werden, z. B. zur Dokumentation, um sie vor Ort und/oder später an einem anderen Ort auszuwerten. Beispielsweise können die Abgas- und Schadstoffwerte von Fahrzeugen dahingehend ausgewertet werden, dass für jeden Fahrzeugtyp Durchschnittswerte ermittelt werden, so dass die Werte für jedes einzelne Fahrzeug eines Fahrzeugtyps mit diesem Durchschnittswert verglichen werden können. Beispielsweise kann in einem Abstand zu der Ampel, an der die Abgasdaten erhoben wurden, eine Anzeigenvorrichtung vorgesehen sein, auf deren Bildschirm den Fahrzeugnutzern mitgeteilt wird, ob ihr Fahrzeug im Durchschnitt der erhobenen Abgas- und Schadstoffwerte liegt oder ob Abweichungen vorliegen, die gegebenenfalls die Wartung oder Reparatur des Wagens erforderlich machen.

Diese allgemeine Verwendung der Erfassungsinformation, welche vorzugsweise nicht zur individuellen Auswertung sondern zur allgemeinen Information und/oder Analyse im Kontext einer Vielzahl weiterer Erfassungsinformationen verwendet wird, wird insbesondere als Dokumentation bezeichnet. Dabei wird insbesondere die Zuordnung und/oder Verknüpfung der Erfassungsinformation mit dem Identifikationselement nicht verwendet. Hier ist es im Gegenteil vorzugsweise wünschenswert, diese Zuordnung für eine anonymisierte Verwendung der Daten bei der Dokumentation aufzulösen bzw. nicht zu verwenden. Es kann daher bspw. bevorzugt sein, die Erfassungsinformation noch einmal ohne Identifikationselement abzuspeichern, wobei im Sinne der Anonymisierung sichergestellt werden sollte, dass die Zuordnung zu einem konkreten Objekt prinzipiell nicht vornehmbar ist.

Es kann im Sinne der Erfindung darüber hinaus bevorzugt sein, die Erfassungsinformationen, die von den Erfassungseinrichtungen der Arbeitsstationen aufgenommen, erhoben oder ermittelt werden, mit sogenannten Meta-Daten zu vergleichen. Dabei handelt es sich vorzugsweise um solche Daten, die bekannt und beispielsweise in Datenbanken oder in der Auditoreinrichtung hinterlegt sind. Diese können sich bspw. auch durch vorstehend beschriebene Dokumentation ergeben haben. Es kann sich beispielsweise aber auch um Daten handeln, die von dritter Seite zur Verfügung gestellt wurden, es kann sich z. B. um Abgaswerte handeln, die von den Autoherstellern angegeben werden, um bestimmte Zulassungen zu erreichen oder um ihre Fahrzeuge zu bewerben. Anhand der ermittelten Erfassungsinformationen beziehungsweise Daten, die auf Grundlage der Erfassungsinformationen erzeugt wurden, kann dann beispielsweise die Richtigkeit dieser Meta-Daten kontrolliert werden.

Es kann beispielsweise sein, dass die vorstehend genannte Dokumentation real durch die Arbeitsstation ermittelte Abgaswerte eines bestimmten Autotyps umfassen, die dann bspw. mit Herstellerangaben verglichen werden können. Die Feststellung des Fahrzeugtyps kann z. B. durch die optische Erfassung mit einer Kamera, vorzugsweise bei der Identifikation vorgenommen werden und/oder durch Abgleich des festgestellten Identifikationselements mit einer Datenbank, z. B. den hierzu bekannten Zulassungsdaten, welche den KFZ-Typ umfassen. Zumindest kann mit der vorgeschlagenen Erfindung vorzugsweise festgestellt werden, ob die mit den Erfassungseinrichtungen erhobenen Daten von den bekannten Meta-Daten abweichen, was ein Indiz für die Unrichtigkeit der Meta-Daten wäre.

Meta-Daten können im Sinne der Erfindung auch bevorzugt aktuelle Werte für die Schadstoffbelastung der Luft in dem Bereich sein, in dem sich das betreffende Fahrzeug bewegt. Auf Basis der Erfassungswerte, die bevorzugt aus den erfassten und Zustandsinformationen von der Erfassungseinrichtung abgeleitet werden, die insbesondere dem aktuellen Schadstoffausstoß des Fahrzeugs entsprechen und bevorzugt durch die Auditoreinrichtung mit dem Identifikationselement verknüpft werden, kann dann, bspw. freigegeben durch die Auditoreinrichtung (dieser Prozess wird bevorzugt als Freigabe bezeichnet), eine individuelle Steuerung des Fahrzeugs durch eine Informationsübertragung von Steuerungsinformationen durch eine Arbeitsstation auf Basis der Fahrzeug-Identifikation erfolgen.

Dies wird bevorzugt als Prozess-Schritt an dem Objekt bezeichnet, wobei das Objekt insbesondere das Fahrzeug umfasst. Der vorzugsweise dadurch geänderte Zustand des Objekts kann bevorzugt ausgesucht sein aus der Gruppe umfassend die Emission des Fahrzeugs, den Ort der Emission des Fahrzeugs, den Ort und/oder die gefahrene Strecke des Fahrzeugs, die Steuerung des Fahrzeugs und/oder eine Aktivierbarkeit des Fahrzeugs (werden bestimmte Emissionswerte überschritten, kann das Fahrzeug z. B. nicht mehr gestartet werden).

Die Steuerungsinformationen können im Sinne der Erfindung bevorzugt verbindliche Navigationsdaten für das Fahrzeug-Navigationssystem sein, was in der Praxis beispielsweise flexiblen und individuellen Fahrverboten entsprechen würde, es kann sich jedoch auch um Abrechnungsdaten, vorzugsweise in Verbindung mit Navigationsdaten handeln, durch die flexible und individuelle Schadstoffgebühren, in der Praxis also z. B. schadstoffabhängige Mautgebühren, erhoben werden. Im Sinne der Erfindung erfolgt diese Übertragung zum Fahrzeug vorteilhafterweise kryptografisch gesichert und verändert vorzugsweise mindestens Teile der Identifikationsdaten bzw. von mit dem Identifikationselement verknüpften Daten, beispielsweise über die bereits geleisteten Gebühren oder Umwege, die gefahren werden mussten. Auf diese Weise kann in Abhängigkeit von aktuellen Luft-Schadstoffbelastungen der Verkehrsstrom so intelligent geleitet werden, dass zum einen eine Überschreitung von Schadstoffgrenzwerten vermieden wird, zum anderen aber auch die entstehen Lasten gleich verteilt werden.

Vorzugsweise wird einem Fahrzeug in diesem Ausführungsbeispiel schon während oder vor dem Beginn einer Fahrt von der Arbeitsstation eine Steuerungsinformation o.ä. zugesandt, welche bevorzugt verbindlich ist und vorzugsweise eine Zustandsänderung am Objekt darstellt. Spätestens auf der Fahrtstrecke wird dann durch die Arbeitsstation bzw. die Erfassungseinrichtung die Erfassungsinformation, z. B. in Form von Abgaswerten, welche an einem Ort und/oder auf der Fahrtstrecke emittiert werden, erhoben. Es kann auch bevorzugt sein, keine fest an einer Strecke installierten Erfassungseinrichtung und/oder Arbeitsstation zu verwenden, sondern eine Erfassungseinrichtung in Form eines Sensors am Auspuff des Fahrzeugs und/oder einer Arbeitsstation umfassend eine Recheneinheit an Bord des Fahrzeugs, welche z. B. die Streckenführung vornimmt. Ein Identifikationselement, welches vorzugsweise fest dem Fahrzeug zugeordnet ist, aber bspw. auch Identifikationsdaten über den Fahrer umfassen kann, sichert dabei bspw. eine abgasbasierte Streckenführung gegen Manipulationen ab.

Es kann im Sinne der Erfindung auch bevorzugt sein, die von den Erfassungseinrichtungen erhobenen Daten in Bezug auf Stadtteile oder Abgasschwerpunkte auszuwerten, wenn in einer Stadt oder Gemeinde ein Netz von Abgasschächten eingerichtet ist.

In einer bevorzugten Ausführungsform der Erfindung ist die Auditoreinrichtung dazu eingerichtet eine Vorgabeinformation zu empfangen und die Erfassungsinformation in Abhängigkeit der Vorgabeinformationen dem Objekt zuzuordnen.

Ein "Vorgabeinformation" meint bevorzugt eine Information, welche das System durch eine externe Quelle beispielsweise einen externen Server erhält und welche sich auf das Objekt und/oder einem an dem Objekt vorzunehmenden Arbeitsprozess bezieht. Bevorzugt kann es sich bei den Vorgabeinformationen auch um Metadaten handeln.

Beispielsweise kann die Erfassungsinformation, welche dem Objekt zuzuordnen ist auf Basis der Vorgabeinformation abgeändert oder aber deren Umfang vorgeben werden.

In Bezug auf das obige Beispiel zur Verwendung des Systems für eine Schadstoffüberwachung, welche schadstoffabhängige Mautgebühren oder Steuerung für Fahrzeuge ermöglicht, kann es sich beispielsweise bei der Vorgabeinformation um eine Angabe zu Metadaten zu Emissionswerten oder Abrechnungsbedingungen handeln. Beispielsweise können durch die Vorgabeinformation Preise oder Preisänderungen in Bezug auf die abzurechnende Maut in Abhängigkeit der Schadstoffemission bzw. Route festgelegt werden.

So können beispielsweise die zugelassenen Abgaswerte durch Übermittlung einer Vorgabeinformation aktualisiert werden. Beispielsweise kann im Falle einer überhöhten Schadstoffemission die zugelassenen Emissionswerte kurzfristig gesenkt werden, um einer potentiell gesundheitsgefährdenden Entwicklung entgegenzuwirken.

Bevorzugt kann dies zudem in Bezug auf Betriebs- und Zustandsparameter erfolgen. Beispielsweise kann eine aktualisierte Preisrelation als Vorgabeinformation in Bezug auf Zustandsparameter wie Wetterdaten, Umgebungstemperatur, Umgebungsdruck oder Durchschnittswerte für eine aktuelle Schadstoffbelastung der Luft erfolgen.

Hierdurch kann schnell und flexibel auf aktuelle Szenarien reagiert werden. Ist beispielsweise aufgrund einer erhöhten Temperatur oder Feinstaubbelastung die Schadstoffemission kurzfristig stark einzuschränken, kann mittels einer Vorgabeinformation eine entsprechende dynamische Preisanpassung vorgenommen werden.

Auch sind individualisierte Preissysteme möglich. Beispielsweise kann die Vorgabeinformation Änderungen in Bezug auf Abonnements oder Pauschalpreise betreffen, wonach für bestimmte Kunden für einen vorgegebenen Zeitraum oder bis zu einer Schadstoffemissionsgrenze keine zusätzliche Berechnung erfolgen sollte.

Für diese Fahrzeuge bzw. Objekt kann beispielsweise entweder die dem Identifikationselement zuzuordnende Erfassungsinformation angepasst werden oder aber die Dokumentation kostenpflichtiger Routen wird bis zum Erreichen des vorgegebenen Zeitraums oder der Schadstoffemissionsgrenze ausgesetzt.

Durch die Bereitstellung einer externen Vorgabeinformation und der beschriebenen Verarbeitung mittels der Auditoreinrichtung ist es vorteilhafterweise möglich auf sichere und robuste Weise auf Änderungen zu reagieren und die Protokollierung anzupassen.

Bei der externen Quelle kann es sich bevorzug um einen externen Server, eine externe Datenverarbeitungseinrichtung oder andere Eingabemöglichkeiten handeln, welche geeignet und bestimmt sind, eine Vorgabeinformation an das System weiterzuleiten.

Die individualisierte Anpassung der Prozessschritte für ausgewählte Objekte, kann bevorzugt anhand der beschriebenen Identifikationselemente für die jeweiligen Objekte erfolgen.

Es ist im Sinne der Erfindung bevorzugt, dass das vorgeschlagene Protokollierungssystem beziehungsweise das vorgeschlagene Protokollierungsverfahren zusammenwirken kann mit anderen IoT-Systemen oder loT-Verfahren, wie zum Beispiel Bezahl- und/oder Authorisierungssystemen oder -verfahren. Dadurch werden die vielfältigen Einsatzmöglichkeiten der Erfindung vorteilhafterweise weiter vergrößert.

Es ist im Sinne der Erfindung bevorzugt, dass die Auditoreinrichtung dazu eingerichtet ist, die Erfassungsinformation in eine Speichereinrichtung des Objekts und/oder in eine Cloud abzuspeichern. In einer weiteren bevorzugten Ausführungsform der Erfindung umfasst das Objekt eine Speichereinrichtung, wobei die Erfassungsinformation in der Speichereinrichtung abspeicherbar ist. Dadurch können die abgespeicherten Informationen zu einem späteren Zeitpunkt für andere Zwecke verwendet oder ausgelesen oder einem bestimmten Nutzerprofil zugeordnet werden.

Es kann im Sinne der Erfindung bevorzugt sein, die Erfassungsinformationen lokal zu speichern oder *remote* auf die Erfassungsinformationen zuzugreifen. Die lokale Speicherung der Erfassungsinformationen innerhalb des Systems, beispielsweise an dem Ort, wo die Daten erzeugt und/oder erhoben werden, ermöglicht vorzugsweise eine Vorfilterung der Daten, so dass beispielsweise nicht mehr alle Daten oder Datensätze von der Erfassungseinrichtung an die Auditoreinrichtung übermittelt werden müssen, sondern lediglich eine deutlich geringere Datenmenge. Dadurch, dass insgesamt weniger Daten übertragen werden müssen, werden Übertragungsressourcen eingespart und die Übertragung der relevanten Daten kann schneller und weniger aufwändig erfolgen.

Es kann im Sinne der Erfindung auch bevorzugt sein, dass die Erfassungsinformation in einer Cloud abgespeichert wird. Dadurch kann auf die Vorsehung eines Speicherplatzes innerhalb der Auditoreinrichtung, einer anderen Systemkomponente oder innerhalb des Objekts verzichtet werden, wodurch Platz gespart wird beziehungsweise eine besonders raumsparende Auditoreinrichtung oder ein besonders raumsparendes Objekt bereitgestellt werden kann.

Wenn die Daten in einer Cloud abgespeichert werden, können die Daten verschiedener Systeme beziehungsweise verschiedener Systemkomponenten miteinander verglichen werden, um beispielsweise im Rahmen eines Benchmarking-Prozesses Durchschnittswerte beziehungsweise Abweichungen zu ermitteln beziehungsweise Objekte, Systeme und Systemkomponenten zu identifizieren, die "im Soll" arbeiten oder (deutliche) Abweichungen vom Durchschnittsverhalten zeigen.

Es ist im Sinne der Erfindung bevorzugt, dass der Auditoreinrichtung und den anderen Komponenten des Systems, insbesondere auch der Erfassungseinrichtung, eine ID beziehungsweise ein ID-Wert zugeordnet wird. Die entsprechenden IDs oder ID-Werte können in jeder Systemkomponente einzeln gespeichert sein. Es kann aber auch bevorzugt sein, dass die IDs oder ID-Werte der Systemkomponenten zentral an einer Stelle des Systems, beispielsweise in einer Steuereinrichtung oder in einer Speichereinrichtung, hinterlegt sind. Es ist im Sinne der Erfindung insbesondere vorgesehen, dass dem Objekt oder Produkt eine ID oder ein Identifikationselement zugeordnet wird, wobei die Auditoreinrichtung vorzugsweise dazu eingerichtet ist.

Es ist im Sinne der Erfindung bevorzugt, dass die Auditoreinrichtung dazu eingerichtet ist, eine Verknüpfung herzustellen zwischen der Erfassungsinformation auf der einen Seite und einer ID des Objekts, einer ID der Erfassungseinrichtung, einer Information zur Arbeitsstation, einer ID der Auditoreinrichtung und/oder einem Zeitstempel auf der anderen Seite. Mit anderen Worten kann es im Sinne der Erfindung bevorzugt sein, eine besonders sichere Verknüpfung herzustellen zwischen
- der Erfassungsinformation und einer ID des Objekts,
- der Erfassungsinformation und einer ID der Erfassungseinrichtung,
- der Erfassungsinformation und einer Information zur Arbeitsstation,
- der Erfassungsinformation und einer ID der Auditoreinrichtung und/oder
- der Erfassungsinformation und einem Zeitstempel.

Es ist im Sinne der Erfindung bevorzugt, dass es sich um eine besonders sichere Verknüpfung handelt, was vorzugsweise durch die Verwendung von FIPS-zertifizierten Vorrichtungen und Methoden erreicht werden kann. Insbesondere handelt es sich um eine kryptografisch sichere Verknüpfung.

Bei der Information zu einer Arbeitsstation kann es sich beispielsweise um eine ID der Arbeitsstation oder um eine Information bezüglich der Konfiguration der Arbeitsstation handeln. Es ist im Sinne der Erfindung zum Beispiel bevorzugt, dass die Erfassungsinformation einem Betriebs- und/oder Zustandsparameter der Arbeitsstation entspricht, wobei der von dem Betriebs- und/oder Zustandsparameter beschriebene Zustand zu dem Zeitpunkt von der Arbeitsstation angenommen wird, in dem das Objekt die Arbeitsstation durchläuft. Der Betriebs- und/oder Zustandsparameter beschreibt zum Beispiel, ob eine Arbeitsstation einsatzbereit ist oder nicht. Wenn eine Arbeitsstation beispielsweise von einem Drucker gebildet wird, kann der Betriebsparameter zum Beispiel angeben, dass der Drucker einsatzbereit ist, weil genügend Papier und Tinte zur Erledigung eines durchschnittlichen Druckauftrags vorhanden sind. Es kann aber auch sein, dass zu wenig Papier und/oder Tinte im Drucker vorhanden ist, so dass der Drucker nicht einsatzbereit und nicht in der Lage ist, die gewünschte Funktion, beispielsweise das Bedrucken einer definierten Anzahl von Briefumschlägen, auszuführen. Die beiden unterschiedlichen Betriebszustände des Druckers - "einsatzbereit" und "nicht einsatzbereit" - würden dann von unterschiedlichen Betriebsparametern repräsentiert beziehungsweise wiedergegeben werden.

Wenn das Objekt oder Produkt von einem Blatt Papier oder einem Briefumschlag gebildet wird, das mit dem Drucker als beispielhafter Arbeitsstation bedruckt wird, so beschreibt der Betriebsparameter insbesondere denjenigen Zustand der Arbeitsstation, den die Arbeitsstation in dem Moment annimmt, wenn das Objekt oder das Produkt in der Arbeitsstation be- oder verarbeitet wird. In dem obigen Anwendungsbeispiel ist es bevorzugt, dass der Betriebsparameter den Zustand des Druckers beschreibt, den der Drucker zu dem Zeitpunkt aufweist oder einnimmt, in dem das Blatt Papier oder der Briefumschlag innerhalb des Druckers von dem Drucker bedruckt wird. Es ist im Sinne der Erfindung bevorzugt, dass der Zustand der Arbeitsstation durch einen Betriebsparameter beschrieben werden kann, der mit der Erfassungsinformation, die mit der Erfassungseinrichtung ermittelt beziehungsweise erfasst wird, assoziiert ist.

Dazu kann die Erfassungseinrichtung vorzugsweise Mittel umfassen, mit denen der Zustand der Arbeitsstation ermittelt beziehungsweise erfasst werden kann. Dabei kann es sich insbesondere um Sensoren handeln, die dazu eingerichtet sind, einen Zustand oder Änderungen eines Zustands festzustellen. Die Sensoren können vorzugsweise ausgewählt sein aus einer Gruppe umfassend Lichtschranken, Kameras, Thermo-Sensoren, optische Sensoren, elektrische Sensoren, magnetische Sensoren und/oder akustische Sensoren, ohne darauf beschränkt zu sein. Es ist im Sinne der Erfindung vorgesehen, dass jeder Arbeitsstation des Systems mindestens eine Erfassungseinrichtung zur Ermittlung von Zuständen der Arbeitsstation zugeordnet ist, wobei die Zustände der Arbeitsstation vorzugsweise mit Betriebs- und/oder Zustandsparametern beschrieben werden, die im Rahmen einer bevorzugten Ausführungsform der Erfindung einem Erfassungswert zugeordnet werden können.

Es kann im Sinne der Erfindung auch bevorzugt sein, dass die Erfassungsinformation einem Zustandsparameter des Objekts entspricht. In dieser Ausgestaltung der Erfindung ist es bevorzugt, dass das vorgeschlagene System Mittel umfasst, mit denen der Zustand des Objekts ermittelt beziehungsweise erfasst werden kann. Dabei kann es sich insbesondere um Sensoren handeln, die dazu eingerichtet sind, einen Zustand des Objekts oder Änderungen eines Zustands des Objekts festzustellen. Wenn das Objekt oder das Produkt beispielsweise von einem Blatt Papier oder einem Briefumschlag, der von einem Drucker als beispielhafter Arbeitsstation bedruckt werden soll, gebildet wird, so kann das System beispielsweise Sensoren umfassen, die in der Lage sind, festzustellen, ob das Papier richtig im Druckereinzug eingelegt ist oder ob das Papier verknittert oder verschmutzt ist. In diesem Anwendungsbeispiel stellt das Bedrucken des Blatt Papiers die Änderung eines Zustands eines Objekts dar, die mit dem Arbeitsverfahren beziehungsweise dem Arbeitsprozess herbeigeführt wird, dessen Schritte im Rahmen des vorgeschlagenen Verfahrens und mit dem vorgeschlagenen System protokolliert werden sollen.

Es kann im Sinne der Erfindung auch bevorzugt sein, dass die Erfassungsinformation einer Information über den Durchlauf des Objekts durch die Arbeitsstation entspricht. Diese Information wird im Sinne der Erfindung vorzugsweise auch als "Durchlaufinformation" bezeichnet oder als Information, dass das Objekt die Arbeitsstation durchlaufen hat oder als Information über den Abschluss des Durchlaufs des Objekts durch die Arbeitsstation. Wenn im hier beschriebenen Anwendungsbeispiel der Drucker mit dem Bedrucken des Papiers oder des Briefumschlags als beispielhaften Produkten fertig ist, kann die Erfassungsinformation darin bestehen, dass die Auditoreinrichtung von der Erfassungsvorrichtung des Druckers eine Benachrichtigung darüber erhält, dass der Druckvorgang beendet ist. Es kann im Sinne der Erfindung auch bevorzugt sein, dass die Erfassungsinformation solche Informationen umfasst, die beispielsweise das Objekt betreffen, während es durch die Arbeitsstation be- oder verarbeitet wird. Wenn beispielsweise ein Blatt Papier im Drucker stecken bleibt, weil das Blatt Papier beispielsweise verknittert war oder der Drucker defekt ist, kann auch dazu eine Erfassungsinformation von der Erfassungseinrichtung des Druckers erzeugt und an die Auditoreinrichtung gesendet werden. Die Information, dass der Druckauftrag zunächst nicht erfolgreich ausgeführt werden konnte, kann beispielsweise als Teil der Meta-Daten in Verbindung mit dem Objekt gespeichert werden, beispielsweise als Teil des später erfolgreich aufgedruckten Portocodes oder als Information, die beispielsweise in einer Blockchain hinterlegt wird.

Es ist im Sinne der Erfindung bevorzugt, dass die Auditoreinrichtung dazu eingerichtet ist, die Erfassungsinformation mit kryptografischen Mitteln abzusichern. Dies kann beispielsweise durch eine vorzugsweise digitale Signierung der Erfassungsinformation erfolgen. Vorzugsweise verfügt die Auditoreinrichtung über kryptografische Fähigkeiten, die bei der Erzeugung der digitalen Signatur verwendet werden, um eine Verschlüsselung und/oder Authentifizierung der übermittelten Informationen zu erreichen oder zu verbessern. Vorzugsweise umfasst die Auditoreinrichtung dazu kryptografische Mittel, beispielsweise einen Prozessor mit hoher Rechenleistung, mit deren Hilfe Informationen, Nachrichten und/oder Transaktionen im vorgeschlagenen System verschlüsselt übermittelt und/oder signiert werden können. Es kann vorteilhafterweise bevorzugt sein, dass eine Public-Key-Infrastruktur (PKI) implementiert wird, um die Sicherheit von Informationen und deren Übertragung zu verbessern.

Es ist im Sinne der Erfindung bevorzugt, dass die Auditoreinrichtung dazu eingerichtet ist, die Erfassungsinformation zu verifizieren.

Die Verifikation erfolgt vorzugsweise durch einen Abgleich einer Erfassungsinformation mit der Identifikationsinformation (dem Identifikationselement), welche vorzugsweise der Information zugeordnet werden soll oder bereits zugeordnet wurde. Als Beispiel kann das Identifikationselement "KFZ-Kennzeichen" mit der Erfassungsinformation "Fahrzeugtyp" verglichen werden und ein Abgleich bspw. mit einer Datenbank und/oder mit früheren diesbezüglich verknüpften Daten vorgenommen werden. Entspricht der dem Identifikationselement zugeordnete Fahrzeugtyp nicht den bereits vorher zugeordneten Informationen, kann so vorteilhafterweise eine Manipulation erkannt werden. Durch die Verifikation kann vorzugsweise die korrekte Ausführung des jeweiligen Prozess-Schrittes erkannt bzw. erreicht werden oder im Fall einer fehlenden Übereinstimmung können auch fehlerhafte Prozess-Schritte bzw. Manipulationen erkannt werden.

Es ist im Sinne der Erfindung bevorzugt, dass das vorgeschlagene Verfahren Blockchain-Technologien verwendet, um die erfolgreich durchgeführten Prozess-Schritte bevorzugt an einem Objekt unverfälschbar, insbesondere durch eine Blockchain zu dokumentieren und/oder Zustandsinformation unmanipulierbar Identifikationselementen zuzuordnen und somit den Bearbeitungs- und/oder Zustandsstatus des Objektes allgemein, sicher und/oder in seinem Verlauf zugänglich zu machen.

Die Erfindung wird anhand der nachfolgenden Figuren näher beschrieben. Es wird angemerkt, dass die Zeichnungen lediglich beispielhaft der Klarstellung der Erfindung dienen und keinen einschränkenden Charakter haben.

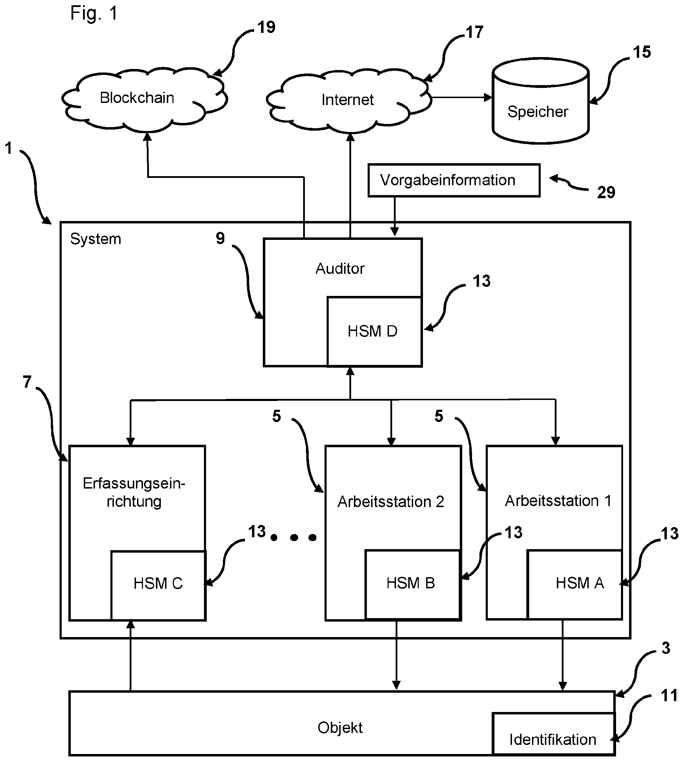

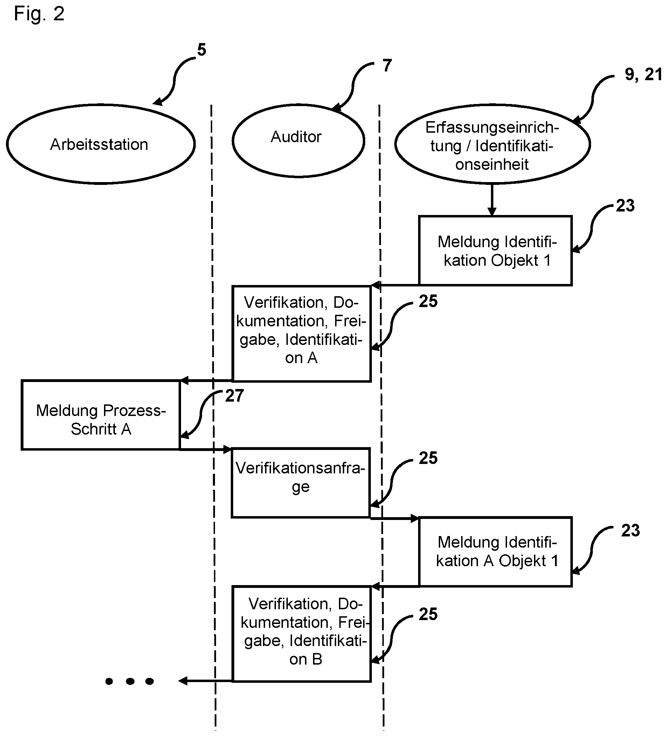

- Figuren 1 und 2:: Schaubilder zur Veranschaulichung der Erfindung

Figur 1 zeigt schematisch ein System **1,** in dem mehrere Arbeitsstationen **5** Prozess-Schritte an einem Objekt **3** durchführen. Die Arbeitseinrichtung kann dabei durch eine Sicherheitseinrichtung in Form eines HSM **13** abgesichert sein, insbesondere bezüglich der Datenübertragung mit anderen Komponenten. Die Erfassungseinrichtung **7** kann mindestens eine dem Objekt **3** zugeordnete Erfassungsinformation erfassen, welche insbesondere mit dem Prozess-Schritt in Zusammenhang steht. Auch die Erfassungseinrichtung **7** kann durch ein HSM **13** abgesichert sein. Das Objekt **3** umfasst bevorzugt ein Identifikationselement **11,** welches z. B. durch eine Identifikationseinheit **21** erfasst werden und der Auditoreinrichtung zugeführt werden kann. Diese kann auch in die Erfassungseinrichtung **7** integriert sein. Es kann ebenso sein, dass das Identifikationselement **11** dem Objekt **3** nur logisch zugeordnet ist und in Form von Daten in einem dem Auditor **9** zugänglichen Speicher **15** vorliegt, beispielsweise in einem Netzwerk, bevorzugt als Teil des Internets **17.**

Die Erfassungsinformation wird der Auditoreinrichtung **9** ausgegeben, so dass dort die Zuordnung der Erfassungsinformation zu dem Identifikationselement erfolgen kann. Hierbei kann es bevorzugt sein, dass der Auditoreinrichtung **9** eine Vorgabeinformation **25** bereitgestellt wird, sodass die Zuordnung der Erfassungsinformation zu dem Identifikationselement in Abhängigkeit der Vorgabeinformation **29** erfolgt. Die Auditoreinrichtung **9** ist bevorzugt ebenfalls durch ein HSM **13** abgesichert. Insbesondere die Kommunikation außerhalb des Systems ist dabei bevorzugt mit kryptografischen Mittel abgesichert, z. B. durch Verwendung einer Public-Key-Infrastruktur. Die aus einander zugeordneten Erfassungsinformationen und Identifikationselementen **11** bestehenden Daten der Auditoreinrichtung können auch mit einer Blockchain **19** abgesichert werden. So können insbesondere die an einem Objekt **3** vorgenommenen Prozess-Schritte vorzugsweise sicher und transparent gespeichert und/oder protokolliert werden.

Figur 2 stellt beispielhaft einen Flow an vom System **1** vorgenommen Schritten vor. Dabei kann eine Erfassungseinrichtung **9** bzw. eine Identifikationseinheit **21** eine Ausgabe **23** eines Identifikationselements vornehmen. In einem Ausführungsbeispiel könnte das System eine Messungseinrichtung, bevorzugt als Arbeitsstation **5,** für Fahrzeuge und deren Abgase an einer vielbefahrenen Straße umfassen, bei der Ausgabe des Identifikationselements könnte es sich um die Identifikation **11** eines PKW anhand des von einer Kamera erfassten Kennzeichnens handeln. Ein Auditor-Prozess-Schritt **25** der Auditoreinrichtung **7** könnte nun darin bestehen, eine Verifikation dieser Identifikation **11** vorzunehmen, indem beispielsweise von der Kamera zusätzlich erfassten Informationen, wie z.B. der Fahrzeugtyp, mit einer zu dem Identifikationselement **11** hinterlegten Information über den Fahrzeugtyp abgeglichen wird.

Des Weiteren könnten Information, z. B. über die Erfassung des Fahrzeugtyps an der Messstelle zu Dokumentationszwecken gespeichert werden, vorzugsweise ohne eine Zuordnung mit dem Identifikationselement **11.** Sind bestimmte Erfassungsinformationen, bspw. die gemessenen Abgaswerte der Messstelle in einem erlaubten Bereich liegen, kann die Auditoreinrichtung eine Freigabe zugeordnet dem Fahrzeug und dessen Informationselement erteilen, bspw. für eine Fahrstrecke, die z. B. in Form von verbindlichen Navigationsdaten an das Fahrzeug gesendet wird. Diese Freigabe wird vorzugsweise an die Arbeitsstation **5** weitergegeben, wo die erforderlichen Prozess-Schritte vorgenommen werden.

Diese vorgenommenen Prozess-Schritte können nun wieder mithilfe der Auditoreinrichtung protokolliert werden und eine weitere Verifikationsanfrage **25** der Auditoreinrichtung **7** auslösen. Diese kann bspw. darin bestehen, sich zu vergewissern, dass der Prozess-Schritt auch tatsächlich die erwünschten Konsequenzen hervorruft, z. B. dass die freigegebene Strecke von dem Fahrzeug auch tatsächlich befahren wird. Dies kann wiederum von einer Erfassungseinrichtung **9** bzw. einer Identifikationseinheit **21** durch Erfassen der relevanten Informationen, vorteilhafterweise an der freigegebenen Strecke und durch Ausgabe **23** des erfassten Identifikationselements an die Audioreinrichtung **7** ausgeführt werden. Dabei werden vorzugsweise weitere Erfassungsinformationen, bspw. betreffend Abgaswerte des Fahrzeugs, erfasst. Nun kann von neuem ein Auditor-Prozess-Schritt **25** ausgelöst werden und der gezeigte Prozess-Flow kann sich weiter fortsetzen.

### Bezugszeichenliste:

- 1: System
- 3: Objekt
- 5: Arbeitsstation
- 7: Erfassungseinrichtung
- 9: Auditoreinrichtung
- 11: Identifikationselement
- 13: HSM
- 15: Speicher
- 17: Netzwerk/Internet
- 19: Blockchain
- 21: Identifikationseinheit
- 23: Ausgabe Identifikationselement
- 25: Auditor-Prozess-Schritte
- 27: Meldung Prozess-Schritt
- 29: Vorgabeinformation

## Patentansprüche

1. System (1) zur Durchführung eines Arbeitsprozesses an einem Objekt (3), wobei der Arbeitsprozess mindestens einen Prozess-Schritt umfasst und wobei durch den Arbeitsprozess mindestens ein Zustand des Objekts (3) zumindest zeitweise verändert wird, wobei das System (1) mindestens folgende Komponenten umfasst:
- eine Arbeitsstation (5) zur Durchführung des mindestens einen Prozess-Schritts des Arbeitsverfahrens,
- eine Erfassungseinrichtung (7) zum Erfassen von mindestens einer dem Objekt (3) zugeordneten Erfassungsinformation
- eine Auditoreinrichtung (9),
wobei jeder Arbeitsstation (5) eine Erfassungseinrichtung (7) zugeordnet ist,
**dadurch gekennzeichnet, dass**
dem Objekt (3) ein Identifikationselement (11) zugeordnet ist und die Erfassungseinrichtung (7) dazu eingerichtet ist, die Erfassungsinformation an die Auditoreinrichtung (9) auszugeben, wobei die Auditoreinrichtung (9) dazu eingerichtet ist, die Erfassungsinformation dem Identifikationselement des Objekts (3) zuzuordnen.

2. Verfahren zur Durchführung eines Arbeitsprozesses an einem Objekt (3), wobei der Arbeitsprozess von einer Arbeitsstation (5) durchgeführt wird und mindestens einen Prozess-Schritt umfasst und wobei durch den Arbeitsprozess mindestens ein Zustand des Objekts (3) zumindest zeitweise verändert wird,
**wobei das Verfahren folgende Schritte umfasst:**
a) Bereitstellung des Objekts (3),
b) Zuordnung eines Identifikationselements (11) zu dem Objekt (3),
c) Erfassung mindestens einer Erfassungsinformation durch eine Erfassungsvorrichtung (7),
d) Übermittlung der Erfassungsinformation durch die Erfassungsvorrichtung (7) an eine Auditoreinrichtung (9),
e) Zuordnung der Erfassungsinformation zu dem/an das Identifikationselement (11) des Objekts (3) durch die Auditoreinrichtung (9).

3. System (1) nach Anspruch 1
**dadurch gekennzeichnet, dass**
die Erfassungsinformation einen Betriebsparameter der Arbeitsstation (5) umfasst, wobei der von dem Betriebsparameter beschriebene Zustand zu dem Zeitpunkt von der Arbeitsstation (5) angenommen wird, indem das Objekt (3) die Arbeitsstation (5) durchläuft.

4. System (1) nach Anspruch 1 oder 3
**dadurch gekennzeichnet, dass**
die Erfassungsinformation einen Zustandsparameter des Objekts (3) umfasst.

5. System (1) nach einem oder mehreren der Ansprüche 1, 3 oder 4
**dadurch gekennzeichnet, dass**
die Erfassungsinformation eine Information über den Durchlauf des Objekts (3) durch die Arbeitsstation (5) umfasst.

6. System (1) nach einem oder mehreren der Ansprüche 1, 3 bis 5
**dadurch gekennzeichnet, dass**
das Identifikationselement (11) dem Objekt (3) physisch zugeordnet ist.

7. System (1) nach einem oder mehreren der Ansprüche 1, 3 bis 6
**dadurch gekennzeichnet, dass**
das Identifikationselement (11) dem Objekt (3) logisch zugeordnet ist.

8. System (1) nach einem oder mehreren der Ansprüche 1, 3 bis 7
**dadurch gekennzeichnet, dass**
die Auditoreinrichtung (9) dazu eingerichtet ist, eine Vorgabeinformation (29) zu empfangen und die Erfassungsinformation in Abhängigkeit der Vorgabeinformationen (29) dem Objekt (3) zuzuordnen.

9. System (1) nach einem oder mehreren der Ansprüche 1, 3 bis 8
**dadurch gekennzeichnet, dass**
die Auditoreinrichtung (9) ein Hardware Security Module (HSM) (13) umfasst.

10. System (1) nach einem oder mehreren der Ansprüche 1, 3 bis 9
**dadurch gekennzeichnet, dass**
die Auditoreinrichtung (9) dazu eingerichtet ist, die Erfassungsinformation zu verifizieren.

11. System (1) nach einem oder mehreren der Ansprüche 1, 3 bis 10
**dadurch gekennzeichnet, dass**
die Auditoreinrichtung (9) dazu eingerichtet ist, die Erfassungsinformation mit kryptografischen Mitteln abzusichern.

12. System (1) nach einem oder mehreren der Ansprüche 1, 3 bis 11
**dadurch gekennzeichnet, dass**
die Auditoreinrichtung (9) dazu eingerichtet ist, die Erfassungsinformation in eine Speichereinrichtung (15) des Objekts (3) und/oder in eine Cloud abzuspeichern.

13. System (1) nach einem oder mehreren der Ansprüche 1, 3 bis 12
**dadurch gekennzeichnet, dass**
die Auditoreinrichtung (9) dazu eingerichtet ist, eine Verknüpfung herzustellen zwischen der Erfassungsinformation und einer ID (11) des Objekts (3), einer ID der Erfassungseinrichtung (7), einer Information zur Arbeitsstation (5), einer ID der Auditoreinrichtung (9) und/oder einem Zeitstempel.
